# EUROPEAN PATENT SPECIFICATION

(11) **EP 3 101 045 B1**
(45) Date of publication and mention of the grant of the patent: **24.04.2019**
(21) Application number: 16001241.5
(22) Date of filing: 02.06.2016
(51) Int. Cl.: C08G 18/76, C08G 18/40, C08G 18/18, C08K 3/00, C08K 5/49, C08K 5/3492, C08K 5/521, C08G 101/00, C08K 3/22, C08K 3/32

(54) **POLYURETHANE FOAM WITH REDUCED FLAMMABILITY, REDUCED SMOKE DEVELOPMENT AND LOW SMOKE TOXICITY**
POLYURETHANSCHAUM MIT VERRINGERTER ENTFLAMMBARKEIT, VERRINGERTER RAUCHENTWICKLUNG UND NIEDRIGER RAUCHTOXIZITÄT
MOUSSE DE POLYURÉTHANE PRÉSENTANT UNE INFLAMMABILITÉ RÉDUITE, FUMÉE RÉDUITE, TOXICITÉ RÉDUITE DE LA FUMÉE

(30) Priority: 03.06.2015 CZ 20150375
(43) Date of publication of application: 07.12.2016
(73) Proprietor: Borcad Cz s.r.o., 73945 Frycovice (CZ)
(72) Inventor: KUDLÁCEK, Daniel, 74257 Libhost' (CZ)
(74) Representative: Kendereski, Dusan

(56) References cited:
- WO-A1-2014/016167
- DE-A1- 10 302 198
- US-A- 4 529 742

## Description

### Technical Field

The invention relates to polyurethane foams having reduced flammability, reduced smoke development and low smoke toxicity, for use mainly as upholstery of seats, couchettes and berths in rail vehicles.

### Background of the Invention

Polyaddition is a step-growth polymerization reaction, wherein the linking of monomer units does not release any low-molecular-weight by-product. The synthesis of polyurethanes is based on the polyaddition reaction of diisocyanates to bi- or polyfunctional hydroxy compounds to form carbamate (urethane) linkages (-O-CO-NH-). For the production of polyurethane (hereinafter referred to as PUR) foam, the reaction of isocyanate groups with water is of importance, releasing CO₂ which acts as a blowing agent. Tertiary amines can preferably be used as a polyaddition catalyst.

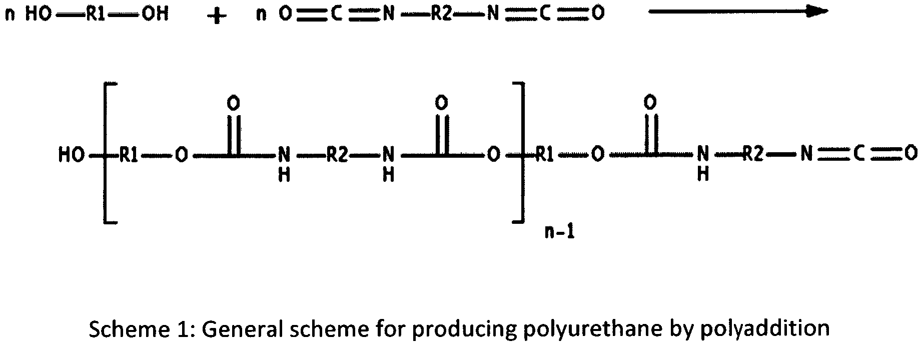

However, with their wide range of applications, polyurethanes are flammable materials, which leads to an increased risk and the need to add flame retardants to mixtures. In accordance with the latest standards of fire safety, PUR foams used primarily for upholstery of seats, couchettes and berths in rail vehicles have to meet strict criteria, particularly with regard to limited flammability, smoke development and toxicity of combustion products. The existing conventional systems of PUR foams based on isocyanate, polyol, catalysts, additives and flame retardants use e.g. melamine, modified graphite, inorganic compounds or various organic and inorganic phosphates or polyphosphates for their retarding.

Combustion of polyurethane produces rigid polyaromatic structures, from which cracks on the surface are formed due to the effect of flame heat. Subsequently, gaseous or volatile low molecular weight decomposition products of polyurethane are leaking through these cracks, contributing to combustion in its centre as a fuel.

In the formulation of polyurethane foam, melamine phosphate acts as a condenser of melamine to its dimer (melam), trimer (melem), up to its polymer (melon), while releasing ammonia in the temperature range between 200 and 500 °C, both in sublimation of melamine itself at approximately 250 °C, as well as subsequent dissociation of melamine in the gaseous phase to cyanamide. Releasing of non-flammable gases (ammonia, cyanamide) to the centre of fire has a diluting effect in the gaseous phase and forms a protective layer just above the surface of the material, thus displacing air from the centre of fire. Furthermore, dissociation of melamine to cyanamide is an endothermic reaction, which results in removal of heat from the burning polymer and its cooling. Also, a carbonized non-flammable layer is formed on the surface of polyurethane at temperatures above 450 °C.

In the case of PUR foam formulation with ammonium polyphosphate (NH₄PO₃)ₙ, polyaromatic structures linked by P-O-C bridging bonds are formed at the surface. This structure is able to lower the internal pressure caused by decomposition products, and thus to delay the formation and expansion of cracks, which also results in preventing access of air into the polymer matrix and preventing access of volatile decomposition products into the fire centre. Also, dehydration of polyurethane (i.e. removal of active hydrogen atoms) by polyphosphoric acid appears to be an accompanying process, causing the formation of carbonized layer on the surface.

In the case of PUR foam formulations with magnesium hydroxide Mg(OH)₂, endothermic decomposition of magnesium hydroxide to magnesium oxide MgO and water at about 300 to 330 °C is the main process. This reaction triggers the following processes in the fire centre:
- endothermic decomposition of Mg(OH)₂ removes heat from the burning polymer, thus cooling it,
- MgO formed on the surface, together with the carbonized polymer layer, acts as a protective insulating layer,
- water vapour released by the reaction has a diluting effect in the gaseous phase and forms a protective layer just above the surface of the material, which displaces the air from the fire centre.

The international patent application WO2012/116884 A1 describes a polyurethane formulation, which uses ammonium polyphosphate or melamine phosphate, or a combination of both, as a flame retardant in the amount of 10-50 wt. %, relative to 100 wt. % of total formulation, and it further contains magnesium oxide particles in the amount of 0.01 to 0.3 wt. % relative to the amount of wt. % of phosphate ingredients. The ratio of ammonium polyphosphate and melamine phosphate is not specified, and furthermore, the patent discusses primarily the formulation with either the first or the second component. With the above formulations it is possible to obtain better test results in the oxygen index test, but at the cost of a higher content of added flame retardants in the system (10 wt. % of ammonium polyphosphate and the oxygen index value of 34 vol. %). The application does not deal with the use of polyurethane formulation in flexible parts of seat upholstery for public transport vehicles. Moreover, the higher weight ratios make the production of PUR system technically difficult or even impossible under industrial conditions in the highpressure injection machine.

The US patent application US2009/0099274 A1 discloses a preparation of MDI based polyurethane foams having the maximum content of 20 wt. % of flame retardants, including chlorinated phosphates, triethyl phosphate, ammonium phosphate or melamine, in the presence of sterically hindered amines as polyaddition catalysts. The said formulation further comprises blowing agents in the form of hydro(halo)olefins and also a silicone surfactant. The document deals mainly with the selection of a suitable blowing agent, polyaddition catalyst and surfactant, and as to suitable flame retardants, it merely lists the suitable compounds.

The European patent application EP1184522 A2 discloses a foam polyurethane, including a list of possible flame retardants, *inter alia,* polyammonium phosphate, melamine phosphate, tris(2-chloro-1-methylethyl)phosphate, triethyl phosphate and magnesium hydroxide. The formulation also contains various binders, fillers, blowing agents and powdered metals. The document lacks data on properties of the resulting formulation, such as the oxygen index value, MARHE value, optical smoke density, ignition time and development. Thus, the skilled person does not know whether the resulting formulation is suitable for a particular application set forth herein.

The international patent application WO2014/016167 A1 mentions ammonium polyphosphate and organic phosphate esters as possible flame retardant additives in the amount of less than 3 wt. %. However, at the amount of ammonium polyphosphate or organic phosphate lower than 5 wt. % its flame retardant properties are significantly reduced and it is unusable for seat upholstery.

The European patent application EP0389768 A2 describes a polyurethane polymer formulation comprising, as a flame retardant, ammonium polyphosphate or other amino polyphosphates (dimethylammonium phosphate, diethylammonium phosphate, ethylenediamine phosphate, melamine orthophosphate or melamine pyrophosphate) in the amount of 10 to 40 wt. %, nitrogen organic compound (urea, dicyandiamide, cyanuric acid, piperazine and its derivatives, melamine, melamine cyanurate, melamine borate, melamine sulphate or hydroxyalkyl derivatives of isocyanuric acid) in the amount of 10 to 40 wt. %., and magnesium hydroxide or aluminium hydroxide in the amount of 10 to 40 wt. %. A more complicated formulation with said additives in high amounts may cause an excessive thickening of the system, difficult production without using additives and blowing agents, and foam instability.

The European patent application EP2374843 A1 describes a polyurethane formulation comprising polyurethane, aluminium/magnesium hydroxide, a phosphoric acid ester, a layered silicate and an inorganic oxide, wherein the phosphate content is from 5 to 35 parts and the magnesium hydroxide content is from 45 to 85 parts to 100 parts of polyurethane. This formulation contains a high amount of inorganic additives and is thus unsuitable for seat upholstery.

The US patent US6404971 B2 discloses a fireproof polyurethane formulation for cable insulation comprising aluminium or magnesium hydroxide and a high-boiling phosphate, preferably resorcinol-bis(diphenyl)phosphate. The document contains only one example of the formulation composition, namely 18.6 parts of resorcinol-bis(diphenyl)phosphate, 66.7 parts of aluminium hydroxide and 0.6 parts of erucic acid amide to 100 parts of polyurethane. This formulation also contains high amounts of inorganic additives and is unsuitable for seat upholstery.

The German patent application DE10302198 A1 discloses a flame-retardant polyurethane foam composition based on a diisocyanate and a diol or polyol mixture with preferably other reaction components and a method of production of said foam for use in closures of openings, such as room partitions, separations of cables or piping, flame retardant seals or cavity fillings. Other reaction components may include alcohols (i.e. glycerine or ethylene glycol), organotin compounds, amines (i.e. triethanolamine), ammonium polyphosphate, phosphorpolyols, substituted alkylphosphates (i.e. tris-(2-chloroisopropyl)phosphate), phosphoric acid esters, fibres (i.e. glass fibres), hydroxides (i.e. aluminium hydroxide), polyaddition catalysts (i.e. cyclohexyldimethylamine), dyes, foam stabilisers, melamine, crude vermiculite, graphite or an aqueous solution. A more complex formulation with additives in high amounts may cause an excessive thickening of the system, difficult production without using additives and blowing agents, and foam instability.

Similarly, other polyurethane foam formulations having flame retardant properties are mentioned in documents WO2006/075136 A2 (a flame retardant material with particles of ammonium phosphate microencapsulated in a melamine matrix), US2005/0288402 A1 and US2005/0285086 A1 (a composition of flame retardants comprising melamine phosphate, ammonium phosphate, amides and polymeric forms thereof, magnesium, aluminium and/or cobalt hydroxide, and an organic phosphate), EP2690118 A1 (a polyurethane blended with polyphosphates, organic phosphates, phosphites and phosphonates, amino catalysts and other additives), US2014/0094530 A1 (a polyurethane composition further comprising blowing agents and non-halogenated flame retardants, e.g. ammonium polyphosphate, melamine and derivatives thereof, magnesium hydroxide, triethyl phosphate, and others) and US4529742 A (optionally foamed intumescent masses prepared from polyisocyanates, hydroxyl compounds and melamine phosphates).

In order to fulfil the requirements, EN45545-2 standard was established, specifying the requirements for fire behaviour during combustion of materials and products used in trains. According to this standard, it is necessary to demonstrate the heat development, O₂ consumption, smoke density and smoke toxicity not only of the PUR foam itself, but also of any material composition by testing. The term any material composition typically refers to a coating material (e.g. fabric, natural leather, artificial leather), a fire-barrier (e.g. glass fabric), a PUR foam, a polymer, a plywood, a wooden board, special textiles, and the like. For satisfactory testing results, it is desirable to ensure compliance with the following parameters:
- maximum average rate of heat emission (MARHE) <50 kW.m⁻²
- maximum optical smoke density <300 m²/m²
- toxicity of combustion products, particularly of CO₂, CO, HF, HCI, HBr, HCN, SO₂ and NOx, expressed as a toxicity Index CITg <0.9.

### Summary of the Invention

This invention claims a polyurethane foam for flexible parts of seat upholstery for public transport vehicles, having reduced flammability, reduced smoke development and low smoke toxicity, based on a diisocyanate of methylenediphenyl diisocyanate type, a polyol, melamine phosphate, tris(2-chloro-1-methylethyl)phosphate and *N,N-*dicyclohexylmethylamine, with its principle consisting in that the polyurethane foam further comprises a flame retardant or a mixture thereof, selected from the group consisting of ammonium polyphosphate in the amount of 5-8 wt. %, magnesium hydroxide in the amount of 5-10 wt. % and triethyl phosphate in the amount of 5-10 wt. % relative to 100 wt. % of the formulation before the addition of said flame retardants.

The diisocyanate of methylenediphenyl diisocyanate type includes primarily methylenediphenyl-4,4'-diisocyanate (Formula I), but it does not exclude other isomers, e.g. 2,2'- and 2,4'-isomers. Further, the diisocyanate is preferably of polymeric methylenediphenyl diisocyanate, wherein in addition to said 4,4'-monomer or isomers thereof, there are also present high molecular weight fractions of polymethylene polyphenylisocyanates. In one embodiment of the diisocyanate component, the content of polymeric methylenediphenyl-4,4'-diisocyanate is from 10 to 90 wt. %.

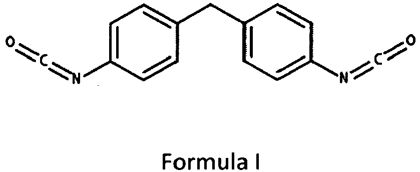

The polyol refers to any compound with multiple hydroxyl groups capable of reacting with an isocyanate group to form polyurethane. This may be a polyether polyol or a polyester polyol having free hydroxyl groups. In one embodiment, before mixing with other ingredients, the polyol formulation in the PUR foam contains melamine phosphate (Formula II) in the amount of 40 wt. % and tris(2-chloro-1-methylethyl)phosphate in the amount of 5-20 wt. % as flame retardants, and *N,N*-dicyclohexylmethylamine in the amount of 0.1 to 3wt. % as a polyaddition catalyst. In one embodiment, the polyol formulation comprises melamine polyphosphate.

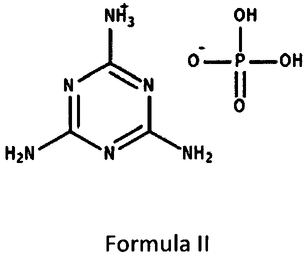

The embodiment of the present invention is described herein in three PUR foam formulations designated as K10, KS11, and KS12.

The PUR foam designated as K10 consists of a diisocyanate of polymeric methylenediphenyl diisocyanate type, a polyol, melamine phosphate, tris(2-chloro-1-methylethyl)phosphate and *N,N*-dicyclohexylmethylamine, as described above, and is also added with ammonium polyphosphate (NH₄PO₃)ₙ (Formula III) as a flame retardant. The ammonium polyphosphate is added in the amount of preferably 6 wt. % relative to the weight of total formulation. The chemical reaction during combustion consists in decomposition of nitrogen components and formation of water, which is a more significant contributor to flame retardance of the system. Further, a solid carbonized layer is formed on the charred surface restricting access of air into the fire centre.

The PUR foam designated as KS11 consists of a diisocyanate of polymeric methylenediphenyl diisocyanate type, a polyol, melamine phosphate, tris(2-chloro-1-methylethyl)phosphate and *N,N*-dicyclohexylmethylamine, as described above, and is also added with magnesium hydroxide Mg(OH)₂ and triethyl phosphate O=P(OCH₂CH₃)₃ (Formula IV) as flame retardants. Triethyl phosphate also acts as a surfactant for reducing smoke development and thus smoke optical density development, as well as a blowing agent and a reagent. The additives are added in the amount of preferably 5 wt. % of Mg(OH)₂ and 5 wt. % of O=P(OCH₂CH₃)₃ relative to the weight of total formulation.

The PUR foam designated as KS12 consists of a diisocyanate of polymeric methylenediphenyl diisocyanate type, a polyol, melamine phosphate, tris(2-chloro-1-methylethyl)phosphate and *N,N*-dicyclohexylmethylamine, as described above, and is also added with magnesium hydroxide Mg(OH)₂ and triethyl phosphate O=P(OCH₂CH₃)₃ (Formula IV) as flame retardants. Triethyl phosphate also acts as a surfactant for reducing smoke development and as a blowing agent and a reagent. The additives are added in the amount of preferably 5 wt. % of Mg(OH)₂ and 10 wt. % of O=P(OCH₂CH₃)₃ relative to the weight of total formulation.

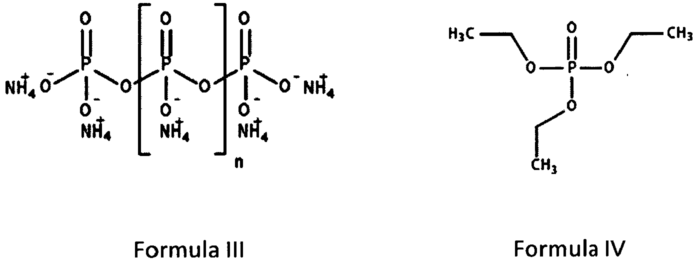

The industrial production is performed by a one-shot process. The components are mixed directly, by mixing the main reactants, catalysts, fillers, additives and flame retardants. The exothermic reaction is completed within about 2 to 15 minutes. The PUR foam reaches its final properties after approximately 24 hours.

By treating with ammonium polyphosphate as an additive, the time to ignition was extended (971 s), the rate of heat emission (in case of sandwiches with the coating fabric or leather) was decreased to approximately 40 kW.m⁻², and the maximum smoke optical density was decreased to about 250 m²/m².

The treatment with magnesium hydroxide and triethyl phosphate as additives decreased the rate of heat emission (in case of sandwiches with the coating fabric or leather) to approximately 30 kW.m⁻² and the maximum smoke optical density to about 250 m²/m².

### Brief Description of the Drawings

The invention will be further illustrated by means of drawings, wherein:
- Fig. 1 shows the results of MARHE comparison for K10 formulation and PUR foam without additives.
- Fig. 2 shows the results of MARHE testing for K10 formulation in three material versions.
- Fig. 3 shows the heat development and MARHE values for K10 formulation alone (dashed curve) as well as with the coating fabric (dotted curve), and for PUR foam without additives (continuous curve).
- Fig. 4 shows the results of testing the smoke optical density for K10 formulation.

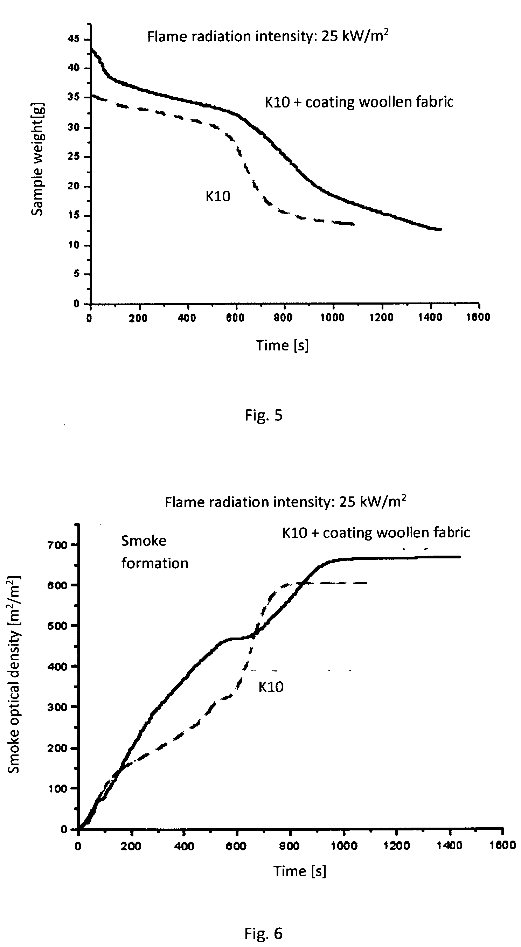

- Fig. 5 shows the weight loss for K10 formulation PUR foam alone (dashed curve) as well as with the coating fabric (continuous curve), at a flame radiation intensity of 25 kW.m⁻².
- Fig. 6 shows the smoke development for K10 formulation PUR foam alone (dashed curve) as well as with the coating fabric (continuous curve), at a flame radiation intensity of 25 kW.m⁻².

### Examples of Embodiments

### Example 1: Composition and preparation of K10 formulation

The diisocyanate of polymeric methylenediphenyl diisocyanate type is mixed with the polyol component of the PUR foam in the weight ratio of 100:45 (i.e. 69 wt. % of diisocyanate and 31 wt. % of the polyol component) at 23 °C. This polyol component (i.e. 31 wt. % of the formulation) already contains 40 % of the melamine phosphate (i.e. 12.5 wt. % of the formulation) and 5-20 wt. % of tris(2-chloro-1-methylethyl)phosphate (i.e. 1.5 to 6 wt. % of the formulation) as the flame retardants, and 0.1 to 3 wt. % of *N,N*-dicyclohexylmethylamine (i.e. 0.03 to 0.9 wt. % of the formulation) as the polyaddition catalyst. Thus, the polyol itself is present in the formulation in the amount of 11 to 17 wt. %. The above-mentioned percentages make up 100 wt. % of total formulation before the addition of ammonium polyphosphate. The mixture is further added with 6 wt. % of ammonium polyphosphate acting as a flame retardant relative to 100 wt. % of the formulation before adding the retardant. The reaction parameters are the foam starting time of 14 s, the upward time of 135 s, the mould temperature at 50 °C and the production time of 4 min. The PUR foam reaches its final properties after approximately 24 hours.

### Example 2: Composition and preparation of KS11 formulations

The diisocyanate of polymeric methylenediphenyl diisocyanate type is mixed with the polyol component of the PUR foam in the weight ratio of 100:45 (i.e. 69 wt. % of diisocyanate and 31 wt. % of the polyol component) at 23 °C. This polyol component (i.e. 31 wt. % of the formulation) already contains 40 wt. % of melamine phosphate (i.e. 12.5 wt. % of the formulation) and 5-20 wt. % of tris(2-chloro-1-methylethyl)phosphate (i.e. 1.5 to 6 wt. % of the formulation) as flame retardants, and 0.1 to 3 wt. % of *N,N*-dicyclohexylmethylamine (i.e. 0.03 to 0.9 wt. % of the formulation) as a polyaddition catalyst. Thus, the polyol itself is present in the formulation in the amount of 11 to 17 wt. %. The above-mentioned percentages make up 100 wt. % of total formulation before the addition of magnesium hydroxide and triethyl phosphate. The mixture is further added with 5 wt. % of magnesium hydroxide and 5 wt. % of triethyl phosphate acting as flame retardants relative to 100 wt. % of the formulation before adding these retardants. The reaction parameters are the foam starting time of 14 s, the upward time of 135 s, the mould temperature at 50 °C and the production time of 4 min. The PUR foam reaches its final properties after approximately 24 hours.

### Example 3: Composition and preparation of KS12 formulation

The diisocyanate of polymeric methylenediphenyl diisocyanate type is mixed with the polyol component of the PUR foam in a weight ratio of 100:45 (i.e. 69 wt. % of a diisocyanate and 31 wt. % of the polyol component) at 23 °C. This polyol component (i.e. 31 wt. % of the formulation) already contains 40 % of melamine phosphate (i.e. 12.5 wt. % of the formulation) and 5-20 wt. % of tris(2-chloro-1-methylethyl)phosphate (i.e. 1.5 to 6 wt. % of the formulation) as flame retardants, and 0.1 to 3 wt. % of *N,N*-dicyclohexylmethylamine (i.e. 0.03 to 0.9 wt. % of the formulation) as a polyaddition catalyst. Thus, the polyol itself is present in the formulation in the amount of 11 to 17 wt. %. The above-mentioned percentages make up 100 wt. % of total formulation before the addition of magnesium hydroxide and triethyl phosphate. The mixture is further added with 5 wt. % of magnesium hydroxide and 10 wt. % of triethyl phosphate acting as flame retardants relative to 100 wt. % of the formulation before adding these retardants. The reaction parameters are the foam starting time of 14 s, the upward time of 135 s, the mould temperature at 50 °C and the production time of 4 min. The PUR foam reaches its final properties after approximately 24 hours.

The advantages of the present formulations are demonstrated by the results of the following tests and comparisons with PUR foams without additives of the prior art, namely Elastoflex W 5662-1 produced by Elastogran GmbH. All values listed below are averages of multiple measurements.

### Example 4: Analysis of the maximum average rate of heat emission for K10 formulation and a PUR foam without additives

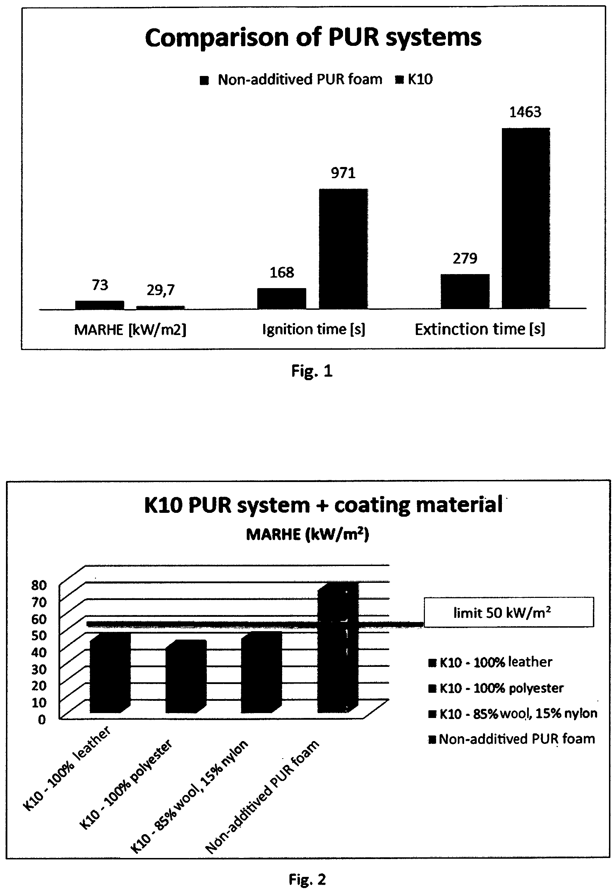

The maximum average rate of heat emission (MARHE) is tested by a cone calorimeter method according to ISO 5660-1 standard, which requires the value of <50 kW.m⁻². The K10 formulation was compared to a PUR foam without additives. The results are shown in Table 1 and in Fig. 1.

**Table 1: Results of MARHE comparison for K10 formulation and a PUR foam without additives**

| **PUR system** | **MARHE [kW.m⁻²]** | **Ignition time [s]** | **Extinction time [s]** |
|---|---|---|---|
| PUR foam without additives | 73 | 168 | 279 |
| K10 formulation | 29.7 | 971 | 1463 |

### Example 5: Analysis of the maximum average rate of heat emission for K10 formulation in three versions with coating materials

The K10 formulation was further tested in three versions with coating materials - 100% natural leather; 100% polyester; and 85% wool + 15% nylon, against a control sample of a PUR foam without additives. The test parameters also included Pyroplex beech plywood and 100% polyamide fabric. The results are shown in Table 2 and in Fig. 2.

**Table 2: Results of MARHE testing for K10 formulation**

| **PUR system** | **MARHE [kW.m⁻²]** |
|---|---|
| K10 (100% leather) | 43 |
| K10 (100 polyester) | 39 |
| K10 (85% wool + 15% nylon) | 44.3 |
| PUR foam without additives | 73 |

### Example 6: Analysis of the maximum average rate of heat emission and heat development for K10 formulation and PUR foam without additives

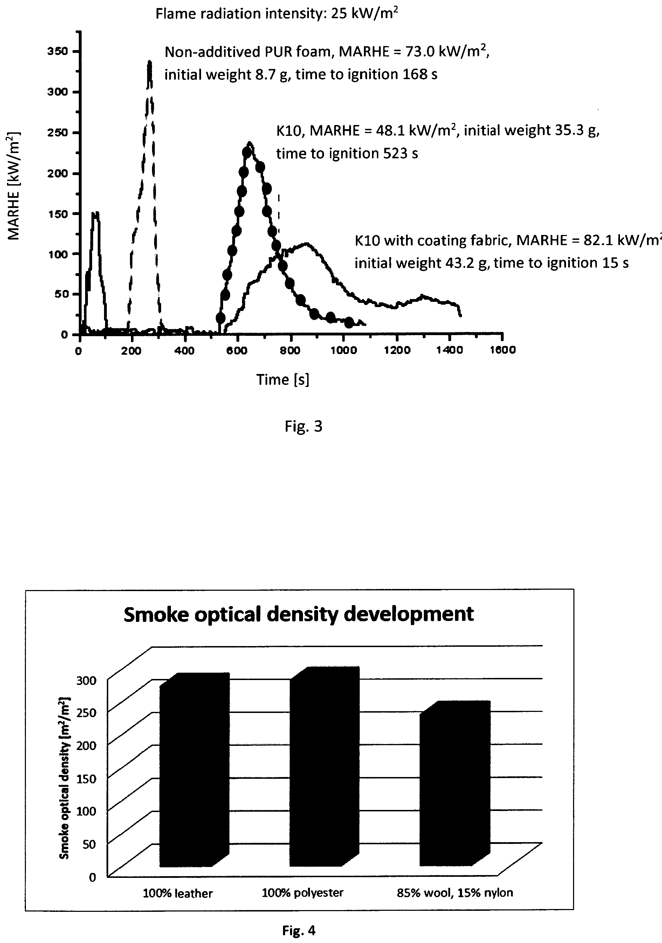

The heat development and MARHE value for burning of K10 formulation PUR foam were further compared to a PUR foam without additives and also to a possible embodiment of K10 formulation with an exemplary coating woollen fabric. The test is performed at a flame radiation intensity of 25 kW.m⁻². Another tested parameter included the time to first ignition. The results are shown in Table 3 and in Fig. 3.

**Table 3: Development of heat and MARHE value for K10 formulation alone as well as with the coating fabric, and for a PUR foam without additives**

| **PUR system** | **MARHE [kW.m⁻²]** | **Time to first ignition [s]** |
|---|---|---|
| PUR foam without additives | 73.0 | 168 |
| K10 formulation | 48.1 | 523 |
| K10 formulation + coating fabric | 82.1 | 15 |

### Example 7: Analysis of smoke development for K10 formulation in three versions with coating materials

The smoke development was analysed according to ISO 5659-2 standard, which requires the value of <300 m²/m². The values of smoke optical density for three versions of K10 formulation with coating materials - 100% natural leather; 100% polyester; and 85% wool + 15% nylon are included in Table 4 and in Fig. 4.

**Table 4: Results of smoke optical density testing for K10 formulation**

| **K10 formulation** | **Smoke optical density [m²/m²]** |
|---|---|
| 100% leather | 275 |
| 100% polyester | 284 |
| 85% wool + 15% nylon | 231 |

### Example 8: Analysis of the maximum average rate of heat emission, smoke development and toxicity index for K10 formulation in two versions with coating materials

The K10 formulation was tested in two versions with coating materials - 100% polyester; and 85% wool + 15% nylon according to CSN EN 45545-2 standard, which requires the MARHE value of <50 kW.m⁻², the smoke development of <300 m²/m² and the toxicity index <1. The testing parameters also included the underlying and strength material Progtex Aramid. The results are shown in Table 5.

**Table 5: Results of MARHE testing, smoke optical density and toxicity index for K10 formulation**

| **K10 formulation** | **MARHE [kW.m⁻²]** | **Smoke optical density [m²/m²]** | **Toxicity Index** |
|---|---|---|---|
| 100% polyester | 43.3 | 268 | 0.29 |
| 85% wool + 15% nylon | 35.2 | 255 | 0.13 |

The results show that for train seats with used coating fabric made of wool (85% wool + 15% nylon) or 100% polyester it is not required to insert additional fire barrier under the fabric in the form of a fireblock (saving costs and weight).

### Example 9: Analysis of a maximum average rate of heat emission and peak of heat emission of the whole seat in two versions with coating materials

The whole seat based on K10 formulation was tested in two versions with coating materials - 100% polyester; and 85% wool + 15% nylon according to CSN EN 45545-2 standard, which requires the MARHE value of <50 kW.m⁻² and the peak of rate of heat radiation (i.e. RHR peak) of <350 kW. The seat composition also included plywood and a plastic cover back. The results are shown in Table 6.

**Table 6: Results of MARHE and heat emission peak testing for the whole seat**

| **K10 formulation - the whole seat** | **MARHE [kW.m⁻²]** | **The peak of heat emission [kW]** |
|---|---|---|
| 100% polyester | 43.3 | 268 |
| 85% wool + 15% nylon | 35.2 | 255 |

### Example 10: Oxygen index testing for K10 formulation

The oxygen index was tested for K10 formulation PUR foam and a PUR foam without additives. The standard requires the limit of >28 vol. %. The results are shown in Table 7.

**Table 7: Results of oxygen index testing**

| **PUR system** | **Oxygen index** |
|---|---|
| K10 formulation | 31.2 ± 0.1 vol. % |
| PUR foam without additives | 27.4 ± 0.1 vol. % |

### Industrial Applicability

The industrial applicability is primarily intended for flexible parts of upholstery for seats, couchettes and berths in rail vehicles, but the use e.g. in buses, boats and other means of public transport with demands for enhanced fire safety of passengers is also encompassed.

## Claims

1. Polyurethane foam formulation for flexible parts of seat upholstery in means of public transport, having reduced flammability, reduced smoke development and low smoke toxicity, based on diisocyanate of methylenediphenyl diisocyanate type, polyol, melamine phosphate, tris(2-chloro-1-methylethyl)phosphate and *N,N-*dicyclohexylmethylamine, **characterized in that** it further comprises a flame retardant or a mixture thereof selected from a group consisting of ammonium polyphosphate in the amount of 5-8 wt. %, magnesium hydroxide in the amount of 5-10 wt. % and triethyl phosphate in the amount of 5-10 wt. % relative to 100 wt. % of the formulation before the addition of said flame retardants.

2. The polyurethane foam formulation according to claim 1, **characterized in that** it comprises ammonium polyphosphate in the amount of 6 wt. % relative to 100 wt. % of the formulation before addition of said flame retardants.

3. The polyurethane foam formulation according to claim 1, **characterized in that** it comprises a mixture of magnesium hydroxide in the amount of 5 wt. % and triethyl phosphate in the amount of 5 to 10 wt. % relative to 100 wt. % of the formulation before the addition of said flame retardants.

4. The polyurethane foam formulation according to any one of the preceding claims, **characterized in that** the diisocyanate of methylenediphenyl diisocyanate type comprises 4,4'-methylenediphenyl, 2,4'- and 2,2'- isomers thereof and polymeric forms thereof.

5. The polyurethane foam formulation according to any of the preceding claims, **characterized in that** the polyol comprises a polyether polyol and a polyester polyol having free hydroxyl groups.

6. The polyurethane foam formulation according to any of the preceding claims, **characterized in that** before adding the above flame retardants, the formulation consists of polymeric 4,4'-methylenediphenyl diisocyanate in the amount of 69 wt. %, polyol in the amount of 11 to 17 wt. %, melamine phosphate in the amount of 12.5 wt. %, tris(2-chloro-1-methylethyl)phosphate in the amount of 1.5 to 6wt. % and *N,N-*dicyclohexylmethylamine in the amount of 0.03 to 0.9 wt. %.

## Patentansprüche

1. Polyurethanschaumformulierung für flexible Teile einer Sitzpolsterung in öffentlichen Verkehrsmitteln, mit verminderter Entflammbarkeit, verminderter Rauchentwicklung und geringer Rauchtoxizität, bezogen auf Diisocyanat des Methylendiphenyldiisocyanat-Typs, Polyol, Melaminphosphat, Tris(2-Chlor-1-methylethyl)phosphat und *N*,*N*-Dicyclohexylmethylamin, **dadurch gekennzeichnet, dass** es ferner ein Flammschutzmittel oder ein Gemisch davon aufweist, ausgewählt aus einer Gruppe bestehend aus Ammoniumpolyphosphat in einer Menge von 5-8 Gew.-%, Magnesiumhydroxid in einer Menge von 5-10 Gew.-% und Triethylphosphat in einer Menge von 5-10 Gew.-%, bezogen auf 100 Gew.-% der Formulierung vor der Zugabe der Flammschutzmittel.

2. Polyurethanschaumformulierung gemäß Anspruch 1, **dadurch gekennzeichnet, dass** sie Ammoniumpolyphosphat in einer Menge von 6 Gew.-% aufweist, bezogen auf 100 Gew.-% der Formulierung vor der Zugabe der Flammschutzmittel.

3. Polyurethanschaumformulierung gemäß Anspruch 1, **dadurch gekennzeichnet, dass** sie ein Gemisch aus Magnesiumhydroxid in einer Menge von 5 Gew.-% und Triethylphosphat in einer Menge von 5 bis 10 Gew.-% aufweist, bezogen auf 100 Gew.-% der Formulierung vor der Zugabe der Flammschutzmittel.

4. Polyurethanschaumformulierung gemäß einer der vorhergehende Ansprüche, **dadurch gekennzeichnet, dass** das Diisocyanat des Methylendiphenyldiisocyanat-Typs 4,4'-Methylendiphenyl, 2,4'- und 2,2'-Isomere davon und polymere Formen davon umfasst.

5. Polyurethanschaumformulierung gemäß einer der vorhergehende Ansprüche, **dadurch gekennzeichnet, dass** das Polyol ein Polyetherpolyol und ein Polyesterpolyol mit freien Hydroxylgruppen umfasst.

6. Polyurethanschaumformulierung gemäß einer der vorhergehende Ansprüche, **dadurch gekennzeichnet, dass** die Formulierung vor der Zugabe der oben genannten Flammschutzmittel aus polymerem 4,4'-Methylendiphenyldiisocyanat in einer Menge von 69 Gew.-%, Polyol in einer Menge von 11-17 Gew.-%, Melaminphosphat in einer Menge von 12,5 Gew.-%, Tris(2-chlor-1-methylethyl)phosphat in einer Menge von 1,5 bis 6 Gew.-% und *N*,*N*-Dicyclohexylmethylamin in einer Menge von 0,03 bis 0,9 Gew.-% besteht.

## Revendications

1. Formulation de mousse de polyuréthane pour parties souples de capitonnage de siège dans des moyens de transport public, ayant une inflammabilité réduite, un développement de fumée réduit et une faible toxicité de la fumée, à base de diisocyanate de type diisocyanate de méthylènediphényle, de polyol, de phosphate de mélamine, de tris(2-chloro-1-méthyléthyl)phosphate et de *N,N-*dicyclohexylméthylamine, **caractérisée en ce qu'**elle comprend en outre un retardateur de flamme ou un mélange de ceux-ci choisi dans un groupe constitué par un polyphosphate d'ammonium dans la quantité de 5 à 8 % en poids, de l'hydroxyde de magnésium dans la quantité de 5 à 10 % en poids et du phosphate de triéthyle dans la quantité de 5 à 10 % en poids, par rapport à 100 % en poids de la formulation avant l'ajout desdits retardateurs de flamme.

2. Formulation de mousse de polyuréthane selon la revendication 1, **caractérisée en ce qu'**elle comprend du polyphosphate d'ammonium dans la quantité de 6 % en poids, par rapport à 100 % en poids de la formulation avant l'ajout desdits retardateurs de flamme.

3. Formulation de mousse de polyuréthane selon la revendication 1, **caractérisée en ce qu'**elle comprend un mélange d'hydroxyde de magnésium dans la quantité de 5 % en poids et de phosphate de triéthyle dans la quantité de 5 à 10 % en poids, par rapport à 100 % en poids de la formulation avant l'ajout desdits retardateurs de flamme.

4. Formulation de mousse de polyuréthane selon l'une quelconque des revendications précédentes, **caractérisée en ce que** le diisocyanate de type diisocyanate de méthylènediphényle comprend 4,4'-méthylènediphényl, 2,4'- et 2,2'-isomères de ceux-ci et des formes polymères de ceux-ci.

5. Formulation de mousse de polyuréthane selon l'une quelconque des revendications précédentes, **caractérisée en ce que** le polyol comprend un polyol de polyéther et un polyol de polyester avec des groupes hydroxyles libres.

6. Formulation de mousse de polyuréthane selon l'une quelconque des revendications précédentes, **caractérisée en ce que** avant l'ajout desdits retardateurs de flamme, la formulation est constituée du 4,4'-méthylènediphényl diisocyanate polymère dans la quantité de 69 % en poids, du polyol dans la quantité de 11 à 17 % en poids, du phosphate de mélamine dans la quantité de 12,5 % en poids, du tris(2-chloro-1-méthyléthyl)phosphate dans la quantité de 1,5 à 6 % en poids et du *N*,*N*-dicyclohexylméthylamine dans la quantité de 0,03 à 0,9 % en poids.
